Europäisches Patentamt

(19) European Patent Office

Office européen des brevets

(11) Publication number: **0 008 799**
**B1**

(12) **EUROPEAN PATENT SPECIFICATION**

(45) Date of publication of patent specification: **24.11.82**

(51) Int. Cl.³: **C 23 F 15/00, C 08 F 14/06**

(21) Application number: **79103304.6**

(22) Date of filing: **05.09.79**

(54) **Process for coating reactors using steam application.**

(30) Priority: **08.09.78 US 940539**

(43) Date of publication of application:
**19.03.80 Bulletin 80/6**

(45) Publication of the grant of the patent:
**24.11.82 Bulletin 82/47**

(84) Designated Contracting States:
**BE CH DE FR GB IT LU NL SE**

(56) References cited:
**EP - A - 0 000 166**
**DE - C - 871 439**
**FR - A - 2 307 052**
**US - A - 3 669 946**
**US - A - 4 024 301**
**US - A - 4 024 330**
**US - A - 4 068 059**
**US - A - 4 080 173**
**US - A - 4 081 248**
**US - A - 4 105 840**
**US - A - 4 144 307**

(73) Proprietor: **The B.F. GOODRICH Company**
**Dept. 0015 WHB-6 500 South Main Street**
**Akron, Ohio 44318 (US)**

(72) Inventor: **Miller, Richard Kenneth**
**4338 Candleberry Avenue**
**Seal Beach, California 90740 (US)**
Inventor: **Norris, James Richard, Jr.**
**12312 Chase**
**Garden Grove, California 92645 (US)**
Inventor: **Witenhafer, Donald Edward**
**27394 Benwood Circle**
**North Olmstead Ohio 44070 (US)**

(74) Representative: **von Kreisler, Alek, Dipl.-Chem.**
**et al,**
**Deichmannhaus am Hauptbahnhof**
**D-5000 Köln 1 (DE)**

Courier Press, Leamington Spa, England.

Process for coating reactors using steam application

Background of the invention

As is well known, in polymerization type reactions, deposits or buildup of polymer occurs on the inner reactor surfaces which not only interferes with heat transfer, but decreases productivity and adversely affects polymer quality. This problem is particularly bad in the commercial production of polymers and copolymers of vinyl and vinylidene halides when polymerized alone or with other vinylidene monomers having a terminal $CH_2=C<$ group, or with polymerizable monoolefinic monomers. For example, in the commercial production of vinyl chloride polymers, the same are usually produced in the form of discrete particles by polymerizing in aqueous suspension systems. When employing such a polymerization system, the vinyl chloride, and other comonomers when used, are maintained in the form of small discrete droplets by the use of suspending agents and agitation. When the reaction is complete, the resultant polymer is washed and dried. The reaction is usually conducted under pressure in metal reactors equipped with baffles and high speed agitators. However, these polymerization systems are, in many cases, unstable. As a consequence, polymer buildup forms on the interior surfaces of the polymerization reactor, including the surfaces of the baffles and agitator. Obviously this polymeric buildup must be removed due to the deleterious effect it causes, particularly on heat transfer, polymer quality, and the like.

Various methods have heretofore been proposed for removing the polymer buildup on polymerization reactor surfaces, such as solvent cleaning, the use of various hydraulic and mechanical reactor cleaners, and the like. Also, various methods have been proposed to reduce the amount of formation and the nature of polymer buildup on said surfaces, such as the application to said surfaces, prior to polymerization, of various coatings. See, for example, U.S.—A—4 024 330, 4 024 301, and 4 081 248 and FR—A—2 307 052. These various methods and apparatus have done a more than acceptable job. However, the art continues to strive to find the ultimate in the prevention of polymer buildup, particularly from an economic and environmental point of view.

While the various coating solutions heretofore proposed have been more than satisfactory in achieving the desired results, experience on a commercial scale has shown that there is still room for improvement in this area of the reduction of polymer buildup. For example, more dilute coating solutions would be desirable in order to reduce costs, considering the size of commercial reactors, and to reduce the color of the coating solutions, since most all of them are colored. When, under such circumstances, polymer buildup occurs, such particles of polymer tend to become discolored and very often they flake off causing specks in the finished polymer which obviously detracts from polymer quality. It should be pointed out, however, that the effectiveness of such coating solutions in reducing and substantially eliminating polymer buildup is not affected by such discoloration problem. However, work continues to find the ultimate means of applying a coating to the reactor surfaces, not only from simplicity of operation and from an economic point of view on a commercial scale, but also a process of application in which the potential discoloration problem is substantially eliminated or substantially reduced.

Summary of the invention

It has been found that if a reaction vessel has been previously coated on the interior surfaces with the proper coating, undesirable polymer buildup on said surfaces can be substantially decreased, and in some cases entirely eliminated, when polymerizing olefinic monomers therein. We have found that various coating materials can be applied to the reactor surfaces in the form of a melted mist of the coating material by making such application by the use of steam or superheated steam. Examples of such coating materials are straight chain or branched polyaromatic amines, self-condensed polyhydric phenols, tannic acid and tannates, either natural or synthetic, various alkali soluble and water soluble dyes, as well as organic solvent-soluble dyes, and the like. Due to the nature of the coating composition, and the method of application to the reactor surfaces of the present invention, it can be applied to said surfaces without opening the reactor thus providing a closed polymerization system. In polymerizing the olefinic monomers, the same is done in an aqueous polymerization medium which is kept in contact with said coated surfaces throughout the polymerization reaction.

Detailed description

In accordance with the present invention, a film or coating of the coating material, as hereinafter defined and described, is applied to the internal surfaces of a polymerization reactor or vessel by means of steam or superheated steam. The steam under pressure picks up the coating solution in an aspirator valve, or any other suitable apparatus, such as a vaporizer, etc., and, through appropriate spray nozzles strategically mounted on the reactor, carries the coating to the reactor surfaces in the form of a melted mist of the coating material. All exposed surfaces in the interior of the reactor, in addition to the walls, such as the baffles, agitator, and the like are also coated in like manner at the same time since the spray nozzles are so arranged as to cover the entire interior of the reactor. Further, since the coating is in the form of a mist, all hard to get at sections, such as blind or shadowed areas, of the reactor are likewise uniformly coated employing the instant invention. After the coating solution has been applied to said surfaces, the polymerization medium can be introduced to the reactor and the reaction started without the necessity of drying the surfaces prior to said introduction of the polymerization medium.

The steam is run through the aspirator, where it picks up the coating solution, under a pressure in the range of 3,45 bar (50 psig) to 34,5 bar (500 psig). The pressure of the steam will depend upon the nature and viscosity of the coating solution being employed, as well as the spraying system being used. Usually a pressure in the range of about 6,90 bar (100 psig) and 13,79 bar (200 psig) is sufficient and preferred. The temperature of the steam, as used in the present invention, is in the range of 138 to 242°C. Preferably the temperature of the steam is in the range of 164°C to 194°C. It can be seen from the temperature and pressure of the steam that superheated steam is also applicable in the present invention.

The coating solutions used in the present invention are usually aqueous solutions of the coating materials, said solutions being neutral, basic or acidic. For example, when employing a polyaromatic amine or polyhydric phenol as the coating material, an aqueous alkali metal hydroxide solution thereof can be employed. While the aqueous coating solutions are preferred, organic solvents can also be used, such as methanol, for example. The organic solvents are particularly useful with water-insoluble systems such as certain dyes, for example nigrosine, and the like. Irrespective of the solvent used in making the coating solution, the solvent is vaporized as a result of the steam superheat available and, as previously pointed out, the coating material reaches the reactor surfaces as a melted mist of concentrated coating material. As a result of the improved efficiency of the present coating process, the quantity of coating material required is considerably reduced. In fact, the amount of coating material required is reduced to the point where flushing the reactor with water, or other liquid solvent or nonsolvent, followed by stripping of the effluent and waste disposal, is no longer always necessary. The steam condensate formed in coating the reactor can become part of the reaction medium and no special apparatus or process steps are necessary for its removal. Of course, the condensate can be removed, if one so desires.

After the coating solution is made up, it is fed to the aspirator or like apparatus where it is picked up by the steam. As a result of the steam superheat available, the solvent of the coating solution is vaporized and the coating material is carried to the reactor surfaces by the steam in the form of a melt mist, as previously pointed out. Depending upon the particular coating material being used, and the solvent, usually a coating solution having a concentration of coating material therein in the range of 0.001% to 20.0% by weight is satisfactory. Coating solutions in the range of 0.05% to 10.0% by weight is preferred. The concentration and amount of coating solution used will depend to a large extent on the type of coating material used and to some extent on the spray system employed to apply the coating. For example, when employing a polyaromatic amine as the coating material, 88,7 ml of a 3% by weight solution is sufficient to coat a 9,46 $m^3$-reactor (2500 gallon) using superheated steam. This is a vast improvement over coating application processes heretofore known in the art.

A number of various coating materials, which are capable of resisting polymer buildup, may be employed in making the coating solutions which are useful in practicing the process of the instant invention. Chief among these materials are the straight chain or branched polyaromatic amines or the condensed polyhydric phenols. The polyaromatic amines are made by the reaction of any one by itself, except the polyhydric phenols, or more than one, of the compounds selected from polyamino benzenes, polyhydric phenols, aminophenols, alkyl-substituted aminophenols, diphenylamines, and alkyl-substituted diphenylamines. As examples of such polyaromatic amines, there may be named a few, by way of example, such as the reaction product of m-phenylenediamine (m-PDA) and resorcinol; m-PDA and p-aminophenol; p-PDA and hydroquinone; toluene-2,4-diamine and resorcinol; self-condensed m-PDA; m-PDA, resorcinol and p-aminophenol; etc. These polyaromatic amines are clearly shown and described in U.S. Patent No. 4,024,330, issued May 17, 1977 to Morningstar and Kehe and is incorporated herein. This patent also shows the method of making the polyaromatic amines and the method of applying the same to reactor walls by means of an organic solvent solution thereof.

In U.S. Patent No. 4,024,301, issued May 17, 1977 to Witenhafer, Haehn, and Cohen, there is described a process of applying the straight chain or branched polyaromatic amines, described above, to the reactor surfaces using an aqueous alkali metal hydroxide solution thereof. This patent is also incorporated herein.

In U.S. Patent No. 4,081,248, issued March 28, 1978 to Cohen there is described a process for applying to the reactor surfaces an aqueous alkali metal hydroxide coating solution containing a straight chain or branched polyaromatic amine, as herein described, and a dispersant operable in aqueous media. The useful dispersants, which may be so employed, are polyvinyl alcohol, polyvinyl pyrolidone, gelatin (calf skin), starch and hydroxypropyl methyl cellulose. This patent is also incorporated herein.

Another class of coating materials very useful in substantially eliminating polymer buildup in polymerization reactions is the selfcondensed polyhydric phenols which are also operable in the practice of the present process using steam as the carrier. These coating material are shown and described in U.S. Patent No. 4,080,173, issued March 21, 1978, to Cohen, which is incorporated herein. This patent also shows the method of making the self-condensed polyhydric phenols. In the patent, there is applied to the reactor surfaces a coating composition containing, as a primary ingredient, (1) the self-condensation product of a polyhydric phenol, or (2) the condensation product of two or more polyhydric phenols, or (3) the self-condensation product of a polyhydric naphthol, dissolved in an aqueous alkali metal hydroxide solution. The polyhydric phenols used in making the condensation products are resorcinol, hydroquinone, catechol and phloroglucinol.

Another class of materials which are suitable for making aqueous coating solutions for application to reactor surfaces to substantially eliminate polymer buildup thereon, and which can be employed in the present process, are the tannins, such as, for example, tannic acid. The tannins are divided into two main groups, namely, hydrolyzable tannins and condensed tannins. The tannins are usually identified from the source of extraction, that is, the tree or plant. As examples of the hydrolyzable tannins and their source, there may be named Chinese gall or tannic acid, myrobalans tannins (nuts), valonia tannins (cups and beards), chestnut tannins (wood), divi-divi tannis (pods) and the like. As examples of the condensed tannins and their source, there may be named oak tannins (bark), hemlock tannins (bark), wattle tannins (bark), sumach tannins (leaves), quebracho tannins (wood), mangrove tannins (bark), gambier tannins (leaves), and the like. Also useful are the ammonium tannates and tannins complexed with metal ions. The tannins are shown and described in pending U.S. Application Serial No. 807,957, filed June 20, 1977, in the name of Cohen, now U.S. Patent No. 4,105,840.

Another class of materials which are suitable for making coating solutions for applications to reactor surfaces in accordance with the present process, for substantially eliminating polymer buildup, are various dyes or dyestuffs. For example, the alkali soluble dyes which can be dissolved in an aqueous alkali metal hydroxide solution or an ammonium hydroxide solution, as shown and described in U.S. Patent No. 4,068,059, issued January 10, 1978, to Witenhafer, and incorporated herein. The alkali soluble dyes are those which contain in their chemical structure one or more of the following radicals: —OH, —COOH, —SO₃H, and —SO₃Na, which radicals may be the same or different on any one dye structure. The classes of dyes which have one or more of said radicals are the azo dyes, such as monoazo and polyazo dyes; metal-containing azo dyes; mordant dyes; pyrazolones; stilbene dyes; azoic dyes, phenols; naphthols; anthraquinone dyes; diphenylmethane and triphehylmethane dyes; thiazoles, nitro dyes; nitroso dyes; xanthenes; benzoquinones and naphthoquinones; and solubilized vat dyes, such as indigoids and anthraquinoids. Also the ionic dyes are useful, such as acridines, azines, oxazines and the thiazines.

Further dyes are the water-soluble dyes which are shown and described in EP—A1— 0 000 166. These dyes contain one or more of the following radicals: —COONa, —COOH, —SO₃H, and —SO₃Na. The dyes shown in said application are incorporated herein by reference.

In addition to the dyes mentioned above, various organic solvent-soluble dyes may be used, such as nigrosine, aniline black, etc.

As previously pointed out, a coating solution of the coating materials described herein, when applied to the surfaces of a polymerization reactor, in accordance with the present invention, will substantially reduce the buildup of polymer thereon. However, many of the coating materials are colored and solutions thereof will discolor many of the polymer particles that do form on the inner surfaces of the reactor. If these polymer particles are inadvertently removed from said surfaces, during the source of making the polymerization product, such as polyvinyl chloride (PVC), the entire batch of polymer can be rejected for inferior quality due to the occurrence of said off-white particles of polymer. However, this discoloration problem is essentially overcome by the use of the present invention since the amount of colored buildup preventing coating solutions required is so low as to usually avoid this problem. We have found that a concentration of coating material in the range of 0.001% to 20.0% or more by weight is satisfactory in accomplishing the objectives of the present invention. A preferred concentration range of coating material is in the range of from 0.05% to 10.0% by weight of the coating material in the aqueous or organic solvent solution.

In order to prevent polymer buildup in a reactor, it is believed that you need a water-wettable surface. When a metal or solid surface is non-wettable, a liquid, such as water, thereon will form droplets and not flow out into a smooth uniform film. An ordinary solid surface, such as stainless steel for example, is not water-wettable due to the normal contamination of said surface with organic materials through contact with the atmosphere. The surface can be cleaned, such as with chromic acid or an abrasive cleanser for example, and it will become water-wettable. However, this is not the full answer, since the surface will not remain in that condition for a sufficient length of time, that is, for more than the duration of a single polymerization reaction. That is to say, the surface must be recleaned after each polymerization cycle. Therefore, applying a coating to the surface which will be waterwettable and resist polymer buildup thereon and remain on said surface throughout multiple reaction cycles is more desired.

The wettability of a solid surface can be measured. The angle formed between the tangent of the side of the droplet and the metal or glass surface is called the "contact angle" and is referred to as "theta" $(\theta)$. A further measurement of the wettability of a solid surface is the critical surface tension for wetting a solid surface and is expressed as "$\gamma c$". The $\gamma c$ is measured in dyes per centimeter. Using water as the standard, in order for a solid surface to be wettable, $\theta$ must equal 0 or be very close to it, $\gamma c$ must be 72 mN/m (72 dynes/cm) or greater.

More importantly, the coating material being applied to the surface should not only form a wettable surface, but also form a continuous layer or film thereon which is not readily removable. This film or coating adheres to the solid or metal surface by adsorption and in many cases, the film is a monolayer of the coating material applied with is of the order of a molecule in thickness. These films of such thickness are invisible to the naked eye, thus further solving the color problem heretofore referred to. Of course, films of greater thickness can result when using higher solids content coating solutions which films or coatings are visible to the naked eye. The film or layer formed by the coating composition applied to the surface by steam or superheated steam, in accordance with the present invention, is not removable by washing with water. That is to say, the coating or film is resistant to removal from the reactor surfaces when a turbulent aqueous reaction medium is in contact therewith, caused by the agitation of the polymerization mixture in the reactor.

The coating solutions useful in the present invention are made by conventional methods, using heat and agitation where necessary. Usually a temperature in the range of 0°C to 100°C is satisfactory. Agitation during dissolution of the coating material is desirable. When the concentration of the coating material is within the range given above, the coating solution thereof may be easily applied to the reactor surfaces by means of steam or superheated steam through spray nozzles mounted on the reactor. Further, the molecular weight of the coating material has an effect on the concentration of the same in the coating solution or the total solids of said solution. Still further, these factors may vary the concentrations of coating materials in the coating solutions given above.

It should be pointed out that the coating compositions, used in the present invention, work equally well on glass or metal surfaces, such as stainless steel and the like. While the exact mechanism of the coating to the surfaces of the reactor is not known for certain, it is believed to involve some type of electrical force or adsorption betwen the reactor surfaces and the coating material, particularly with some coating solutions. At any rate, the coating compositions useful in the present invention do substantially eliminate polymer buildup on said surfaces and what little polymer buildup, if any, that may occur is of the "sandy" type which is of such a nature that it is readily removable from the reactor surfaces without the necessity of manual scraping procedures. The polymer buildup to be avoided is what is referred to as "paper" buildup since this type of buildup is very difficult to remove and usually requires hand scraping or the use of a high pressure jet stream of water or other liquid. In either event, the reactor must be opened in order to clean the same, which of course allows the escape of unreacted monomer, such as vinyl chloride, into the atmosphere which is hazardous to health.

Using the steam application of the coating, in accordance with the present invention, multiple polymerizations may be run without opening the reactor between charges. Although multiple charges may be run without recoating the surfaces, it has been found to be expeditious, and preferred, to recoat the reactor after every charge to insure uniform and efficient production. This is very easily done using the steam application of the coating composition through the spray nozzles, as heretofore described. When it is decided to recoat the reactor, the reactor is drained, and the inner surfaces are flushed with water by means of the spray nozzles to remove all loose polymer particles thereon. Then the coating is applied by means of the steam. The reactor may be drained of condensate, if desired, and then, optionally, rinsed or flushed with water, either as such or in the form of a spray. However, since in many cases only about 1 or 2 grams of coating material can be used to coat the reactor, such draining and flushing is not necessary. Thereafter, the reactor is charged with the polymerization medium and ingredients in the usual manner and the polymerization reaction commenced. It is understood, of course, that one can recoat the reactor as often as desired without opening the same, even after every charge is polymerized. It should also be noted that no particular modification of polymerization processing techniques are required due to the presence of the coating. Further, utilization of the internally coated reaction vessel of the present invention does not adversely affect the heat stability or other physical and chemical properties of the polymers produced therein.

While the present invention is specifically illustrated with regard to the suspension polymerization of vinyl chloride, it is to be understood that the instant process may likewise be applied in the dispersion, emulsion or suspension polymerization of any polymerizable ethylenically unsaturated monomer or monomers where undesirable polymer buildup occurs. Examples of such monomers are other vinyl halides and vinylidene halides, such as vinyl bromide, vinylidene chloride, etc., vinylidene monomers having at least one terminal $CH_2=C<$ grouping, such as esters of acrylic acid, for example, methyl acrylate, ethyl acrylate, butyl acrylate, octyl acrylate, cyanoethyl acrylate, and the like; vinyl acetate; acrylonitrile; esters of methacrylic acid, such as methyl methacrylate, butyl methacrylate, and the like; styrene and styrene derivatives including $\alpha$-methyl styrene, vinyl toluene, chlorostyrene, etc., vinyl naphthalene, diolefins including butadiene, isoprene, chloroprene, and the like; and mixtures of any types of these monomers and other vinylidene monomers copolymerizable therewith; and other vinylidene monomers of the types known to those skilled in the art.

The present invention, however, is particularly applicable to the suspension polymerization of vinyl chloride, either alone or in a mixture with one or more other vinylidene monomers having at least one terminal $CH_2=C<$ grouping, copolymerizable therewith in amounts as great as 80% or more by weight, based on the weight of the monomer mixture, since polymer buildup is a problem in this area.

In the present invention, the polymerization process is usually conducted at a temperature in the range of 0°C to 100°C depending upon the particular monomer or monomers being polymerized. However, it is preferred to employ temperatures in the range of 40°C to 70°C, since, at these temperatures, polymers having the most beneficial properties are produced. The time of the polymerization reaction will vary from 2 to 15 hours.

The polymerization process may be carried out at autogeneous pressures although superatmospheric pressures of up to 10 atmospheres or more may be employed with some advantage with the more volatile monomers. Superatmospheric pressures may also be employed with those monomers having the requisite volatilities at reaction temperatures permitting reflux cooling of the reaction mixture.

Further, the polymerization process may be carried out utilising a full reactor technique. That is, the reaction vessel is completely filled with the polymerization medium and kept that way throughout the reaction by constant addition thereto of water or additional make-up liquid containing the monomer or monomers. Upon the addition of a cetatin predetermined amount of liquid, the polymerization reaction is terminated, usually by the addition thereto of a short-stopping agent. The necessity for the addition of liquid is due to the shrinkage in volume of the reaction medium produced by the conversion of the monomer or monomers to the polymeric state.

The various coatings, as particularly set forth in the specific examples, which follow hereinafter, were rated by visual observation.

In order to further illustrate the present invention, the following specific examples are given. It is to be understood, however, that this is merely intended in an illustrative and not limitative sense. In the examples, all parts and percents are by weight unless otherwise indicated.

Example I

In this example, an uncoated reactor was employed to establish a control. The reactor surfaces were cleaned with high pressure water prior to charging the polymerization ingredients. First, 2385 l (630 gallons) of hot demineralized water (52°C) were added to the reactor followed by the addition of 33,57 kg (74 pounds) of a 3% aqueous solution of hydroxypropyl methyl cellulose with agitation by means of the mixing apparatus mounted in the reactor. Then the reactor was closed and evacuated to 847—914 bar (25—27 inches) of mercury with the agitator off. Then the catalyst was added, which was 254 g (0.54 pound) of di-secondary butyl peroxydicarbonate as a 20% solution in hexane. The agitator was started and 1361 kg (3000 pounds) of vinyl chloride added to the reactor. The reaction mixture was heated to 52°C and the polymerization reaction was carried out at this temperature for 8.5 hours. After this charge was completed and the polymer removed, the reactor was rinsed with water and three additional charges were run in the reactor in like manner. After the fourth charge the reactor was examined for polymer buildup. The blades of the agitator were heavily coated with string buildup and knots or lumps of polymer. The walls were covered with paper buildup. In other words, the reactor with no coating on the surfaces was classified as "dirty".

Example II

In this example, the reactor was coated prior to conducting the polymerization reaction therein. The coating solution contained the polyaromatic amine made by condensing m-phenylenediamine (m-PDA) and resorcinol (RES.) (as shown in U.S. Patent No. 4,024,330). A coating solution concentrate was made up as follows:

15% polyaromatic amine (m-PDA+RES.)
10% NaOH
75% water (demineralized).

20 cm³ of the above solution in 118,3 ml (4 ounces) of demineralized water was then used to coat the internal surfaces of the reactor. The steam was introduced into the reactor through a spray nozzle mounted on the reactor. After 10 to 15 seconds of good steam flow, the coating solution was added slowly to the stream of steam going into the reactor and carried to the inner surfaces as a melt mist. The coating operation took about 10 to 15 seconds and upon completion, the reactor surfaces were rinsed with demineralized water. (Note: this step is optional.) After rinsing, the reactor was charged using the recipe and procedure of Example I. After charging, the reaction mixture was heated to 52°C and the polymerization reaction was carried out at this temperature for 8.5 hours. After this charge was completed and the polymer removed, 3 additional charges were run in the reactor in like manner. Prior to each additional charge, the reactor surfaces were coated in the same manner as described above. Upon examination of the reactor after the fourth charge it was found that the surfaces were almost all free of polymer buildup. What little buildup was present, was the soft sandy type and readily removable with finger tip pressure. There was no paper buildup present in the reactor. This shows the vast improvement over the uncoated or control reactor of Example I.

Example III

In this example, the reactor was coated with a dye dissolved in an organic solvent. Specifically, the coating solution was made by dissolving 6 grams of Nigrosine Z1630 in 236,6 ml (8 ounces) of methyl alcohol. It was found, however, that only 4 grams dissolved giving a saturated solution. The reactor was coated with this solution in the same manner as described in Example II. Then using the polymerization recipe and procedure of Example I, four charges were made, with rinsing and coating of the inner surfaces after each charge. Upon completion of the fourth charge and removal of the polymer the reactor was examined. The reactor was clean with no paper buildup. The agitator blades were clean and only a few spots of sandy buildup was visible in spots, which was easily removable. This example shows the superiority over the control in Example I and also shows that the steam application of the present invention can be successfully employed with organic solvent coating solutions.

Example IV

In this example, the inner surfaces of the polymerization reactor were coated with an aqueous alkali metal hydroxide solution of a self-condensed polyhydric phenol, namely, resorcinol. The self-condensed resorcinol was made in accordance with the procedure shown in U.S. Patent No. 4,080,173. A coating solution concentrate was made up as follows:

15% self-condensed resorcinol
10% NaOH
75% water (demineralized)

20 cm³ of the above solution in 118,3 ml (4 ounces) of demineralized water was then used to coat the internal surfaces of the reactor. The reactor was coated in the same manner as shown in Example II. Again, using the polymerization recipe and procedure of Example I, four charges were made, with rinsing and coating of the inner surfaces after each charge. After the fourth charge, the reactor was examined and found to be in very good condition with respect to polymer buildup. There was no paper buildup and only a few sandy spots which was readily removable. The reactor was far superior to the control.

Example V

In this Example, the inner surfaces of the polymerization reactor were coated with four different coating solutions, which are set out in the Table below. In each case the reactor was coated in the same manner as described in Example II. Thereafter, using the polymerization recipe and procedure of Example I, four charges were made, with rinsing and coating of the inner surfaces after each charge. Upon completion of the fourth charge, in the case of each coating material, and removal of the polymer, the reactor was examined. The results were as follows:

TABLE I

| Coating solution | Reactor condition (after 4 charges) |
|---|---|
| (1) 30 cc tannic acid concentrate* in 236,6 ml (8 oz.) of demineralized water | Good-excellent |
| (2) 2 gms self-condensed resorcinol in 236,6 ml (8 oz.) of 9 pts. tetrahydrofuran and 1 pt. demineralized water | Good-excellent |
| (3) 2 gms 4-phenyl azoresorcinol in 236,6 ml (8 oz.) of 1.0% NaOH | Good-excellent |
| (4) 3 gms Celestine Blue in 236,6 ml (8 oz.) demineralized water | Good-excellent |

*15% Tannic acid; 2.7% $AlCl_3$; 1.5% Ascorbic acid (antioxidant).

In the above charges, there was no paper buildup and what few sandy spots there were, was easily removable. in fact, the sandy spots broke away with an easy touch of the fingers. The reactor, in each case, was far superior to the control.

Coating the internal surfaces of a polymerization reaction by means of the process of the present invention practically eliminates polymer buildup thereon. Less coating material is used thus providing a more economic coating process. The coating process is greatly simplified by making it easier to eliminate a draining and flushing step because of the small amount of coating material used with the steam application thereof. With the present process, one is enabled to operate a closed polymerization system which, in the case of vinyl chloride polymerization, has the advantage of reducing drastically the parts per million of vinyl chloride in the atmosphere of the plant, thus meeting Governmental regulations. Further, as a result of the cleaning action of the steam, periodic nozzle plugging is eliminated and dependable coating application to reactor surfaces operating in the "closed mode" is assured. Numerous other advantages of the present invention will be apparent to those skilled in the art.

While the present invention has been described in terms of its specific embodiments, certain modifications and equivalents will be apparent to those skilled in the art and are intended to be included within the scope of the present invention, which is to be limited only by the scope of the appended claims.

**Claims**

1. A process for substantially eliminating the buildup of polymers on the internal surfaces of a polymerization reaction vessel which comprises making a coating solution of a coating material which, in the form of a film, is capable of resisting polymer buildup thereon, applying said coating material in form of a melted mist to said surfaces by the action of steam of a temperature in the range of 138 to 242°C on said coating solution whereby said coating material is entrained in said steam, said steam acting as a carrier for said coating material, and thereafter conducting the polymerization of the monomer(s) while in constant contact with the coated internal surfaces of said vessel.

2. A process as defined in Claim 1 wherein the monomer is vinyl chloride.

3. A process as defined in Claim 1 wherein the coating material is present in said coating solution in an amount in the range of 0.001% to 20.0% by weight.

4. A process as defined in Claim 1 wherein the steam is under a pressure of 3,45 bar (50 psig) to 34,5 bar (500 psig).

5. A process as defined in Claim 1 wherein the coating material is made by the condensation reaction of any one by itself or more than one of the compounds selected from the group consisting of polyamino benzenes, polyhydric phenols, aminophenols, alkyl-substituted aminophenols, diphenylamines, and alkyl-substituted diphenylamines.

6. A process as defined in Claim 5 wherein the coating solution is an organic solvent solution of the compounds.

7. A process as defined in Claim 5 wherein the coating solution is an aqueous alkali metal hydroxide solution of the compounds.

8. A process as defined in Claim 7 wherein the coating solution contains a dispersant operable in aqueous media and selected from the group consisting of polyvinyl alcohol, polyvinyl pyrrolidone, gelatin (calf skin), starch, and hydroxypropyl methyl cellulose.

9. A process as defined in Claim 1 wherein the coating solution is comprised of an aqueous alkali metal hydroxide solution containing a condensation product selected from the group consisting of the self-condensation product of two or more polyhydric phenols, and the self-condensation product of a polyhydric naphthol, and wherein said polyhydric phenol(s) is selected from the group consisting of resorcinol, hydroquinone, catechol, and phloroglucinol.

10. A process as defined in Claim 1 wherein the coating solution is comprised of an aqueous solution of a tannin, said tannin being selected from the grcup consisting of hydrolyzabie tannins, condensed tannins, ammonium tannates and tannins complexed with metal ions.

11. A process as defined in Claim 10 wherein the tannin is tannic acid.

12. A process as defined in Claim 10 wherein the monomer is vinyl chloride.

13. A process as defined in Claim 10 wherein the tannin is chestnut tannin.

14. A process as defined in Claim 1 wherein the coating solution is comprised of an aqueous alkali metal hydroxide solution of an alkalisoluble dye, said dye having one or more radicals in its chemical structure selected from the group consisting of —OH, —COOH, —SO₃H and —SO₃Na.

15. A process as defined in Claim 14 wherein the dye is an ionic dye selected from the group consisting of acridines, azines, oxazines and thiazines.

16. A process as defined in Claim 1 wherein the coating solution is comprised of an organic solvent solution of an organic solvent-soluble dye.

17. A process as defined in Claim 16 wherein the dye is nigrosine and the solvent is methanol.

18. A process as defined in Claim 1 wherein the coating solution is comprised of an aqueous solution of a water-soluble dye, said dye having one or more radicals in its chemical structure selected from the group consisting of —COONa, —COOH, —SO₃H and —SO₃Na.

19. A process as defined in Claim 1 wherein the monomers are vinyl chloride and vinyl acetate.

## Revendications

1. Procédé pour éliminer presque complètement la formation de polymères sur les surfaces internes d'un réacteur de polymérisation, qui consiste à préparer une solution d'enduction d'un produit d'enduction, qui sous la forme d'un film, est capable de résister à la formation de polymères sur lui, à appliquer sur ces surfaces ce produit d'enduction sous forme d'un brouillard fondu, par action de la vapeur, à une température comprise dans l'intervalle de 138 à 242°C, sur la solution d'enduction, grâce à quoi le produit d'enduction est entraîné dans la vapeur, celle-ci agissant comme un support pour le produit d'enduction, et puis à conduire la polymérisation du (des) monomère(s) en le maintenant en contact constant avec les surfaces internes enduites du réacteur.

2. Procédé selon la revendication 1, dans lequel le monomère est le chlorure de vinyle.

3. Procédé selon la revendication 1, dans lequel le produit d'enduction est présent dans la solution d'enduction en une quantité comprise dans l'intervalle de 0,001% à 20,0% en poids.

4. Procédé selon la revendication 1, dans lequel la vapeur est sous une pression de 3,45 bar (50 psig) à 34,5 bar (500 psig).

5. Procédé selon la revendication 1, dans lequel le produit d'enduction est réalisé par la réaction de condensation de l'un quelconque, seul, ou de plusieurs des composés sélectionnés dans le groupe comprenant les poly-aminobenzènes, les phénols polyhydroxylés, les aminophénols, les aminophénols alkyl-substitués, les diphénylamines et les diphénylamines alkyl-substituées.

6. Procédé selon la revendication 5, dans lequel la solution d'enduction est une solution des composés dans un solvant organique.

7. Procédé selon la revendication 5, dans lequel la solution d'enduction est une solution aqueuse des composés dans un hydroxyde de métal alcalin.

8. Procédé selon la revendication 7, dans lequel la solution d'enduction contient un dispersant réalisable en milieu aqueux et sélectionné dans le groupe comprenant l'alcool polyvinylique, la polyvinylpyrrolidone, la gélatine (peau de veau), l'amidon et l'hydroxypropyl-méthyl-cellulose.

9. Procédé selon la revendication 1, dans lequel la solution d'enduction se compose d'une solution aqueuse d'hydroxyde d'un métal alcalin contenant un produit de condensation sélectionné dans le groupe comprenant le produit d'auto condensation de deux, ou plus, phénols polyhydroxylés, et le produit d'autocondensation d'un naphtol polyhydroxylé, et dans lequel le ou les phénols polyhydroxylés sont sélectionnés dans le groupe comprenant le résorcinol, l'hydroquinone, le catéchol et le phloroglucinol.

10. Procédé selon la revendication 1, dans lequel la solution d'enduction se compose d'une solution aqueuse d'un tanin, ce tanin étant sélectionné dans le groupe comprenant les tanins hydrolysables, les tanins condensés, les tannates d'ammonium et les tanins complexés par des ions métalliques.

11. Procédé selon la revendication 10, dans lequel le tanin est l'acide tannique.

12. Procédé selon la revendication 10, dans lequel le monomère est le chlorure de vinyle.

13. Procédé selon la revendication 10, dans lequel le tanin est le tanin de châtaignier.

14. Procédé selon la revendication 1, dans lequel la solution d'enduction se compose d'une solution aqueuse, dans un hydroxyde d'un métal alcalin, d'un colorant soluble dans les alcalis, ce colorant possédant dans sa structure chimique un ou plusieurs radicaux sélectionnés dans le groupe comprenant —OH, —COOH, —SO$_3$H et —SO$_3$Na.

15. Procédé selon la revendication 14, dans lequel le colorant est un colorant ionique sélectionné dans le groupe comprenant les acridines, les azines, les oxazines et les thiazines.

16. Procédé selon la revendication 1, dans lequel la solution d'enduction se compose d'une solution, dans un solvant organique, d'un colorant soluble dans les solvants organiques.

17. Procédé selon la revendication 16, dans lequel le colorant est la nigrosine et le solvant est le méthanol.

18. Procédé selon la revendication 1, dans lequel la solution d'enduction se compose d'une solution aqueuse d'un colorant soluble dans l'eau, le colorant ayant, dans sa structure chimique, un ou plusieurs radicaux sélectionnés dans le groupe comprenant —COONa, —COOH, —SO$_3$H et —SO$_3$Na.

19. Procédé selon la revendication 1, dans lequel les monomères sont le chlorure de vinyle et l'acétate de vinyle.

## Patentansprüche

1. Verfahren zur weitestgehenden Unterdrückung der Krusteinbildung von Polymeren an den inneren Oberflächen eines Polymerisations-Reaktionsgefäßes, dadurch gekennzeichnet, daß eine Beschichtungslösung aus einem Beschichtungsmaterial hergestellt wird, das in Form eines Films befähigt ist, der Krustenbildung von Polymeren auf diesem entgegenzuwirken, daß das Beschichtungsmaterial durch die Einwirkung von Wasserdampf im Bereich von 138°C bis 242°C auf die Beschichtungslösung, wodurch das Beschichtungsmaterial von dem Wasserdampf mitgeführt wird, in Form eines Nebels der Schmelze auf die betreffenden Oberflächen aufgebracht wird, wobei der Wasserdampf als Träger für das Beschichtungsmaterial wirkt, und daß anschließend die Polymerisation des (der) Monomeren durchgeführt wird, wobei dieses (diese) sich in konstanter Berührung mit den beschichteten inneren Oberflächen des Gefäßes befindet (befinden).

2. Verfahren nach Anspruch 1, dadurch gekennzeichnet, daß das Monomere Vinylchlorid ist.

3. Verfahren nach Anspruch 1, dadurch gekennzeichnet, daß das Beschichtungsmaterial in der Beschichtungslösung in einer Menge im Bereich von 0,001 bis 20,0 Gew.-% vorliegt.

4. Verfahren nach Anspruch 1, dadurch gekennzeichnet, daß der Wasserdampf unter einem Druck von 3,45 bar (50 psig) bis 34,5 bar (500 psig) steht.

5. Verfahren nach Anspruch 1, dadurch gekennzeichnet, daß das Beschichtungsmaterial hergestellt wird durch die Kondensationsreaktion einer der Verbindungen mit sich selbst oder mehrerer Verbindungen miteinander, die ausgewählt sind aus der aus Polyaminobenzolen, mehrwertigen Phenolen, Aminophenolen, alkyl-substituierten Aminophenolen, Diphenylaminen und alkyl-substituierten Diphenylaminene bestehenden Gruppe.

6. Verfahren nach Anspruch 5, dadurch gekennzeichnet, daß die Beschichtungslösung eine Lösung der Verbindungen in einem organischen Lösungsmittel ist.

7. Verfahren nach Anspruch 5, dadurch gekennzeichnet, daß die Beschichtungslösung eine wäßrige Alkalimetallhydroxid-Lösung der Verbindungen ist.

8. Verfahren nach Anspruch 7, dadurch gekennzeichnet, daß die Beschichtungslösung ein Dispergiermittel enthält, das in wäßrigem Medium wirkt und aus der aus Polyvinylalkohol, Polyvinylpyrrolidon, Gelatine (Kalbshaut), Stärke und Hydroxypropylmethylcellulose bestehenden Gruppe ausgewählt ist.

9. Verfahren nach Anspruch 1, dadurch gekennzeichnet, daß die Beschichtungslösung eine wäßrige Alkalimetallhydroxid-Lösung umfaßt, die ein Kondensationsprodukt enthält, das aus der aus dem Selbstkondensationsprodukt zweier oder mehrerer mehrwertiger Phenole und dem Selbstkondensationsprodukt eines mehrwertigen Naphthols bestehenden Gruppe ausgewählt ist, und daß das mehrwertige Phenol (die mehrwertigen Phenole) ausgewählt ist (sind) aus der aus Resorcin.

Hydrochinon, Brenzcatechin und Phloroglucin bestehenden Gruppe.

10. Verfahren nach Anspruch 1, dadurch gekennzeichnet, daß die Beschichtungslösung eine wäßrige Lösung eines Tanins umfaßt, wobei das Tannin ausgewählt ist aus der aus hydrolysierbaren Tanninen, kondensierten Tanninen, Ammoniumtannaten und mit Metallionen Komplexierten Tanninen bestehenden Gruppe.

11. Verfahren nach Anspruch 10 dadurch gekennzeichnet, daß das Tannin Gallusgerbsäure (tannic acid) ist.

12. Verfahren nach Anspruch 10, dadurch gekennzeichnet, daß das Monomere Vinylchlorid ist.

13. Verfahren nach Anspruch 10, dadurch gekennzeichnet, daß das Tannin Kastanien-Tannin ist.

14. Verfahren nach Anspruch 1, dadurch gekennzeichnet, daß die Beschichtungslösung eine wäßrige Alkalimetallhydroxid-Lösung eines alkali-löslichen Farbstoffs umfaßt, wobei dieser Farbstoff in seiner chemischen Struktur einen oder mehrere Reste aufweist, die ausgewählt sind aud der aus —OH, —COOH, —$SO_3H$ und —$SO_3Na$ bestehenden Gruppe.

15. Verfahren nach Anspruch 14, dadurch gekennzeichnet, daß der Farbstoff ein ionischer Farbstoff ausgewählt aus der aus Acridinen, Azinen, Oxazinen und Thiazinen bestehenden Gruppe ist.

16. Verfahren nach Anspruch 1, dadurch gekennzeichnet, daß die Beschichtungslösung eine Lösung eines in einem organischen Lösungsmittel löslichen Farbstoffs in einem organischen Lösungsmittel umfaßt.

17. Verfahren nach Anspruch 16, dadurch gekennzeichnet, daß der Farbstoff Nigrosin ist und das organische Lösungsmittel Methanol ist.

18. Verfahren nach Anspruch 1, dadurch gekennzeichnet, daß die Beschichtungslösung eine wäßrige Lösung eines wasserlöslichen Farbstoffs umfaßt, wobei dieser Farbstoff in seiner chemischen Struktur einen oder mehrere Reste aufweist, die ausgewählt sind aus der aus —OH, —COOH, —$SO_3H$ und —$SO_3Na$ bestehenden Gruppe.

19. Verfahren nach Anspruch 1, dadurch gekennzeichnet, daß die Monomeren Vinylchlorid und Vinylacetat sind.